# EUROPÄISCHE PATENTSCHRIFT

(11) **EP 4 074 144 B1**
(45) Veröffentlichungstag und Bekanntmachung des Hinweises auf die Patenterteilung: **28.01.2026**
(21) Anmeldenummer: 19828993.6
(22) Anmeldetag: 10.12.2019
(51) Int. Cl.: H05B 7/144

(54) **LICHTBOGENOFEN UND VERFAHREN ZUM BETREIBEN EINES LICHTBOGENOFENS**
ELECTRIC ARC FURNACE AND METHOD FOR OPERATING AN ELECTRIC ARC FURNACE
FOUR À ARC ÉLECTRIQUE ET PROCÉDÉ POUR FAIRE FONCTIONNER UN FOUR À ARC ÉLECTRIQUE

(43) Veröffentlichungstag der Anmeldung: 19.10.2022
(73) Patentinhaber: Siemens Energy Global GmbH & Co. KG, 81739 München (DE)
(72) Erfinder: ENGELS, Ralf, 91336 Heroldsbach (DE); STÜRMER, Uwe, 91083 Baiersdorf (DE)
(86) Internationale Anmeldenummer: PCT/EP2019/084465
(87) Internationale Veröffentlichungsnummer: WO 2021/115573

(56) Entgegenhaltungen:
- EP-A1- 2 549 833
- EP-A1- 2 821 743
- WO-A1-2018/233833
- WO-A1-2019/207609
- CN-A- 109 672 172
- DE-A1- 3 733 077
- DE-U1- 29 713 666
- JP-A- H0 878 156

## Beschreibung

Die Erfindung betrifft einen Lichtbogenofen und ein Verfahren zum Betreiben eines Lichtbogenofens.

WO 2018/050332 A1 beschreibt einen Lichtbogenofen gemäß dem Oberbegriff des Anspruches 1. Die Elektroden des Lichtbogenofens können nach Bedarf in Richtung zu einem Boden eines Ofengefäßes des Lichtbogenofens mechanisch nach unten und oben verfahren werden, um den Lichtbogen zwischen den Elektroden und dem darin eingebrachten Einsatzmaterial, insbesondere Stahlschrott, zu zünden und sodann über den Abstand zwischen Elektrode und Einsatzmaterial in dem Ofengefäß des Lichtbogenofens die Lichtbogenspannung, den Strom und damit die eingekoppelte Leistung einzustellen.

Die internationale Patentanmeldung WO 2018/233833 A1 offenbart einen Lichtbogenofen, der von einem Matrixumrichter mit elektrischer Energie versorgt wird. Dabei kann für jeden elektrischen Lichtbogen die Spannung, der Strom und die Frequenz individuell eingestellt werden.

Aus der Patentanmeldung WO 2019/207609 A1 ist ein Lichtbogenofen bekannt, bei dem ein Stromrichter den Strom für die Elektroden bereitstellt. Der Stromrichter wird von einer Steuerungseinrichtung angesteuert.

Die Gebrauchsmusterschrift DE 297 13 666 U1 offenbart eine Vorrichtung zur Erfassung des Schlackezustandes und der Lichtbogenstabilität in einem Lichtbogenofen. Dabei ist die Vorrichtung zur Regelung des Lichtbogenofens unter Erfassung des Schlackezustandes ausgelegt.

Gegenüber den bekannten Lichtbogenofen ist es wünschenswert, die Netzqualitätsmerkmale des den Lichtbogenofen mit Strom versorgenden Stromnetzes zu verbessern. Ferner ist es wünschenswert, den Lichtbogenofen effizienter zu betreiben, als dies durch die Steuerung mithilfe der bekannten mechanischen Verfahrbarkeit der Elektroden möglich ist.

Aufgabe der Erfindung ist es daher, zumindest teilweise die Nachteile aus dem Stand der Technik bekannter Lichtbogenöfen zu vermindern, insbesondere einen die Netzqualitätsmerkmale des den Lichtbogenofen mit Strom versorgenden Stromnetzes zu verbessern und einen effizienten Betrieb des Lichtbogenofens zu ermöglichen.

Die voranstehende Aufgabe wird durch die Gegenstände der Patentansprüche, insbesondere durch einen Lichtbogenofen nach Anspruch 1 und ein Verfahren nach Anspruch 10 gelöst. Weitere Vorteile und Details der Erfindung ergeben sich aus den Unteransprüchen, der Beschreibung und den Zeichnungen. Dabei gelten Merkmale und Details, die im Zusammenhang mit dem erfindungsgemäßen Lichtbogenofen offenbart sind, selbstverständlich auch im Zusammenhang mit dem erfindungsgemäßen Verfahren, sodass bezüglich der Offenbarung zu den einzelnen Erfindungsaspekten stets wechselseitig Bezug genommen wird beziehungsweise werden kann.

Die gestellte Aufgabe wird gemäß einem ersten Aspekt gelöst durch einen Lichtbogenofen mit einem Ofengefäß, drei Elektroden, die in dem Ofengefäß angeordnet sind, einem Transformator, der mit den drei Elektroden verbunden ist, und einem Stromanschluss zum Anschließen an ein Stromnetz zur Bereitstellung von Strom an den Elektroden, wobei der Lichtbogenofen einen Umrichter und ein Regelsystem aufweist, wobei das Regelsystem dazu eingerichtet ist, zumindest einen Parameter der von zumindest einer der drei Elektroden erzeugten Lichtbögen mittels des Umrichters zu regeln.

Erfindungsgemäß wird somit ein Lichtbogenofen bereitgestellt, dessen von den Elektroden erzeugte Lichtbögen mittels des Regelsystems und Umrichters geregelt werden. Dies ermöglicht es, die Netzqualitätsmerkmale des den Lichtbogenofen mit Strom versorgenden Stromnetzes zu verbessern und den Betrieb des Lichtbogenofens effizienter zu gestalten.

Die Lichtbögen werden mittels der Elektroden zwischen diesen und dem stromleitenden Einsatzmaterial erzeugt. Das Einsatzmaterial ist metallisch und begründet dadurch seine stromleitenden Eigenschaften. Als Einsatzmaterial kann beispielsweise Stahlschrott oder Eisenschwamm verwendet werden, die in dem Ofengefäß des Lichtbogenofens mittels der von den Elektroden erzeugten Lichtbögen eingeschmolzen werden.

Der zumindest eine Parameter kann insbesondere eine Stromstärke, eine Spannung oder eine Frequenz der Lichtbögen sein. Wenn der Lichtbogenofen ein Drehstrom-Lichtbogenofen ist, der mit Drehstrom versorgt wird, meint die Stromstärke eine Amplitude des Drehstroms, die Spannung eine Amplitude der Wechselspannung und die Frequenz eine der Wechselspannung.

Das Ofengefäß, in dem die Elektroden angeordnet sind, kann beispielsweise aus einer Stahlkonstruktion und/oder Ziegelkonstruktion bestehen. Das Ofengefäß kann mit einer feuerfesten Verkleidung ausgekleidet sein, um dem geschmolzenen Einsatzmaterial zu widerstehen. Das Ofengefäß kann ferner eine Gießschnauze aufweisen, sodass das Ofengefäß als eine Gießpfanne ausgebildet ist. Dadurch lässt sich das geschmolzene Einsatzmaterial einfach aus der Gießpfanne ausgießen. Die Elektroden können beispielsweise als Graphitelektroden ausgebildet sein.

Bevorzugt ist, dass das Regelsystem dazu eingerichtet ist, den zumindest einen Parameter der von der zumindest einen der drei Elektroden erzeugten Lichtbögen unabhängig von den anderen Elektroden zu regeln. Dies ermöglicht eine auf einzelne Elektroden bezogene Regelung der Lichtbögen. Dadurch kann das Schmelzen des Einsatzmaterials in einer lokalen Umgebung der Elektroden individuell geregelt werden, wodurch ein besonders effizienter Betrieb des Lichtbogenofens ermöglicht wird.

Ferner ist bevorzugt, dass das Regelsystem dazu eingerichtet ist, den zumindest einen Parameter der von der zumindest einen der drei Elektroden erzeugten Lichtbögen mittels des Umrichters entsprechend eines Zustandes und/oder einer Position von Einsatzmaterial in dem Ofengefäß zu regeln. Das Regelsystem kann dabei dazu eingerichtet sein, den Zustand und/oder die Position des Einsatzmaterials, insbesondere mittels des Umrichters, zu erkennen. Dies wird an gegebener Stelle näher erläutert. Somit wird ermöglicht, dass der Lichtbogenofen in der jeweiligen, insbesondere von Zustand und Position des Einsatzmaterials bestimmten, Betriebsphase effizient reagieren kann. Auch dies wird an gegebener Stelle näher erläutert.

Ein möglicher Zustand des Einsatzmaterials ist die zugeführte Form, in der das Einsatzmaterial dem Ofengefäß typischerweise zugeführt wird, also etwa Stahlschrott oder Eisenschwamm. Ein weiterer Zustand ist Schmelze, bei der das Einsatzmaterial bereits mittels der Lichtbögen geschmolzen wurde. Weitere mögliche Zustände des Einsatzmaterials sind zudem Bären oder Eisberge, bei denen das Einsatzmaterial zusammengebacken ist und auf der Schmelze schwimmen kann. Bären und Eisberge sind besonders gefährlich, da diese bei Kontakt mit den Elektroden zu einer Beschädigung, insbesondere einem Bruch, der Elektroden führen können.

Folglich ergeben sich verschiedene Positionen des Einsatzmaterials in dem Ofengefäß. So kann sich das Einsatzmaterial im Zustand der Schmelze auf dem Boden des Ofengefäßes zu einem Schmelzbad absetzen. Bären oder Eisberge können auf der Schmelze schwimmen und sich am Rand des Ofengefäßes oder mittig und/oder zwischen den Elektroden befinden. Die Bären und Eisberge können weiter oder näher an den Elektroden liegen, wodurch, neben der Größe von Bären oder Eisbergen, das Risiko für eine Beschädigung der Elektroden bestimmt wird.

Bevorzugt ist auch, dass der Umrichter als ein Matrixumrichter ausgebildet ist. Dies ermöglicht eine besonders effiziente Regelung mittels des Regelsystems. Auch kann jede der Elektroden mit einem eigenen Umrichter verbunden sein, mittels derer die von der jeweiligen Elektrode erzeugten Lichtbögen geregelt werden können.

Bevorzugt ist zudem, dass der Lichtbogenofen als ein Drehstrom-Lichtbogenofen ausgebildet ist. Bevorzugt ist auch, dass die Elektroden in dem Ofengefäß kreisförmig angeordnet sind. Mit anderen Worten können die Elektroden auf einem gedachten Kreis angeordnet sein. Dies ermöglicht bei dem Drehstrom-Lichtbogenofen ein Rühren des zur Schmelze geschmolzenen Einsatzmaterials. Dies ist sinnvoll, wenn die Schmelze metallurgischen Arbeiten unterzogen wird. Diese metallurgischen Arbeiten können beispielsweise das Zusetzen von Legierungen, das Einstellung eines Kohlenstoffgehaltes in der Schmelze, die Reduzierung von Phosphor und/oder Schwefel in der Schmelze und dergleichen sein. Das Rühren gewährleistet dabei, dass die chemischen Abläufe und Umwandlungen homogen und effizient in die Schmelze eingebracht werden.

Bevorzugt ist außerdem, dass das Regelsystem dazu eingerichtet ist, als den zumindest einen Parameter die Spannung und/oder die Stromstärke der von der zumindest einen der drei Elektroden erzeugten Lichtbögen gegenüber den anderen der drei Elektroden mittels des Umrichters zu senken oder zu erhöhen.

Dies ist für die Beeinflussung der Strahlungssymmetrie in der Hauptschmelzphase und der Flachbadphase besonders vorteilhaft. Die Hauptschmelzphase beginnt, wenn die Elektroden abgesenkt wurden, die Lichtbögen der Elektroden gezündet wurden und sich ein Bohrkrater in dem Einsatzmaterial bildet, der sich zunehmend vertieft und die Lichtbögen verlängert. Die Flachbadphase beginnt mit dem Niederschmelzen des letzten Einsatzmaterials oder auch Schrottkorbes, in dem dieses für den Lichtbogenofen bereitgestellt wird.

In erster Linie sollte die Schmelzleistung während der Hauptschmelzphase und Flachbadphase möglichst symmetrisch in das Ofengefäß eingebracht werden, so dass sowohl der Schmelzprozess in allen Bereichen des Ofengefäßes gleich schnell abläuft, als auch das Verschleißbild des Lichtbogenofens gleichmäßig erscheint und daraus resultierende reparaturbedingte Stillstände planbar sind.

Verschiedene Effekte jedoch beeinflussen die Strahlungssymmetrie und erschweren eine genaue Prozess- und Instandhaltungsplanung. So resultiert das Einsetzen von Einsatzmaterial in das Ofengefäß über einen Kran und einen Schrottkorb resultiert oft in einer ungleichmäßigen Schüttung im Ofengefäß. Daraus ergibt sich zwangsläufig ein frühzeitiges Aufschmelzen in Ofenzonen mit weniger festem, das heißt noch nicht eingeschmolzenem, Einsatzmaterial, während andere Bereiche noch festes Einsatzmaterial aufweisen. Ein Weiterschmelzen mit hoher elektrischer Leistung greift früher freiwerdende Ofenzonen verstärkt an.

In der Flachbadphase ist der Schmelzprozess stabiler und die eingebrachte Strahlungsleistung von den Strom-Spannungssollwerten der Elektroden sowie den drei Teilreaktanzen des Lichtbogenofens abhängig. Man ist bestrebt, das Verschleißbild der drei Zonen des Lichtbogenofens auf lange Sicht zu vergleichmäßigen, indem man die Parameter für jede Elektrode unterschiedlich einstellt, und ggf. zusätzlich den Prozess mit einer sogenannten Schaumschlackenfahrweise unterstützt. Viele weitere Parameter jedoch haben Einfluss auf die Flachbadphase und erschweren einen stabilen, stets gleichmäßigen Schmelzprozess. Dazu gehört ein unterschiedlich schneller Abbrand der Elektroden, der die einzelnen Reaktanzen der Ofenzonen verändert. Auch hierzu gehört, dass eine Absaugung des Ofengefäßes zusammen mit einer Schlackentür Wirbel und dadurch kältere und heißere Ofenzonen schafft. Auch werden fossile Brenner und Sauerstofflanzen werden abhängig von den jeweiligen metallurgischen Anforderungen unterschiedlich gefahren.

Mittels der individuellen Regelung der Lichtbögen der Elektroden mittels des Umrichters jedoch kann die Strahlungssymmetrie bzw. -verteilung aktiv beeinflusst werden. Durch unabhängiges Einstellen der Ströme und Spannungen in den einzelnen Elektroden kann eine 3-phasig unsymmetrische Schmelzleistung bzw. Strahlungsleistung eingestellt werden. Ergibt sich nach längerer Ofenreise zwischen den einzelnen Reparaturzyklen ein stabiles, wiederholtes Verschleißbild des Lichtofens, kann mit dem Umrichter dadurch eine gezielte, feste Vorvertrimmung der Strahlungssymmetrie vorgenommen werden und so dem ungleichmäßigen Verschleiß entgegengewirkt werden. Ferner stellt der Bediener (auch Schmelzer) des Lichtbogenofens oder das Regelsystem in der Flachbadphase fest, dass an einer Ofenzone noch Anbackungen von Einsatzmaterial vorhanden sind, kann über eine temporäre Vertrimmung der Strahlung mit Hilfe des Umrichters eine Abschmelzung eingeleitet werden, ohne die übrigen Ofenzonen über Gebühr zu belasten.

Ferner ist dies besonders vorteilhaft, wenn das Einsatzmaterial als Eisenschwamm vorliegt, der zusammengeschmolzen werden soll. Beim Eisenschwamm handelt es sich um Eisenerz, welches in kleinen Kügelchen von ca. 15 mm Durchmesser vorliegt. Im Gegensatz zum Eisenschrott kann dieses Material logistisch einfach auf Schiffen und weiter mit Bändern transportiert werden. In schrottarmen Ländern oder erzreichen Ländern ist auch auf diese Weise eine Stahlproduktion möglich.

Eisenschwamm über Dosiereinrichtungen kontinuierlich in das Ofengefäß zugeführt werden, in dem es über einen Ofendeckel des Ofengefäßes in das Schmelzbad fällt. Ziel ist es, den derart zugeführten Strahl an Eisenschwamm bzw. den Auftreffpunkt genau im Zentrum zwischen den drei Elektroden auszurichten. Die Lage des Auftreffpunktes ist jedoch von der Förderleistung abhängig, wodurch es dann zu starken Beeinflussungen der Lichtbögen einzelner Elektroden kommt, wenn der Auftreffpunkt zu nahe an diese Elektrode wandert. Dieses Phänomen hat gleich zwei Nachteile. Erstens überhitzt der Schmelzbadbereich der weniger betroffenen Elektroden mit der Gefahr vom Aufkochen der Schmelze. Zweitens wird die elektrische Leistung der betroffenen Lichtbögen der jeweiligen Elektrode reduziert, wodurch die Gefahr von Zusammenbacken der Eisenschwammkugeln und damit der Bildung von Eisbergen steigt. Die Leistungsreduzierung rührt aus einer großen Störung des Lichtbogens durch spritzendes Schmelzbad sowie fallender Eisenschwamm am Lichtbogen her. Mittels des Umrichters kann die Verschiebung des Auftreffpunktes des Eisenschwammes im Schmelzbad erkannt werden, da die Harmonischen im Strom in etwa die Penetrierung des Lichtbogens widergeben. Die elektrische Leistung kann dann an der jeweiligen Elektrode gezielt erhöht bzw. gesenkt werden, ohne die Soll-Gesamtleistung zu verändern. Es wird so auch vermieden, dass Eisberge gegen die Elektroden schlagen und diese abbrechen. Dies vermeidet Produktionsausfall, erhöhte Betriebskosten und die Schmelze muss wegen zu hohem Kohlenstoffanteil auch nicht nachbehandelt werden.

Dabei ist auch bevorzugt, dass das Regelsystem dazu eingerichtet ist, als den zumindest einen Parameter die Spannung und/oder die Stromstärke der von der zumindest einen der drei Elektroden erzeugten Lichtbögen abhängig von einem Ergebnis einer Oberwellenanalyse der Elektroden und/oder einem Ergebnis einer Temperaturanalyse einer Auskleidung des Ofengefäßes zu senken oder zu erhöhen. Dies ermöglicht es, dass wenn eine Ofenzone in der Hauptschmelzphase frühzeitig frei wird, dies über die Oberwellenanalyse sowie den Temperaturverlauf der Auskleidung des Ofengefäßes bzw. der Ofenwand dies detektiert wird. In dieser Zone kann über temporäres Runterregeln der Schmelzleistung der dieser Zone zugeordneten Elektrode ein hoher Ofenverschleiß vermieden werden.

Dabei ist auch bevorzugt, dass das Regelsystem dazu eingerichtet ist, als den zumindest einen Parameter die Spannung und/oder Stromstärke der von der zumindest einen der drei Elektroden erzeugten Lichtbögen mittels des Umrichters zu senken, wenn mittels des Umrichters eine erhöhte Stromstärke an der zumindest einen der drei Elektroden registriert wird.

Dies ist besonders in der Hauptschmelzphase vorteilhaft. Dabei übertragen die Lichtbögen die Schmelzleistung (auch Strahlung) von den Elektroden auf das diese umgebende Einsatzmaterial. Das Einsatzmaterial wird dadurch erhitzt, fällt zusammen und schmilzt zu einer Schmelze bzw. einem Schmelzbad in dem Ofengefäß. Dabei fallen regelmäßig Stücke des Einsatzmaterials, also etwa Schrottstücke, gegen die Elektroden, da das langsam weicher werdende Gefüge des Einsatzmaterials, das meist zu einem Berg geschüttet vorliegt, instabil wird. Bei dem Aufprallen der Stücke des Einsatzmaterials kommt es daher zu zahlreichen Kurzschlüssen zwischen den Elektroden und dem Einsatzmaterial.

Der Zustand des Einsatzmaterials in Form von Stücken kann hier aufgrund der Kurzschlüsse mittels des Umrichters erkannt werden, da an diesen wegen der Spannungsabfälle an den Lichtbögen eine erhöhte Stromstärke auftritt. Ferner kann anhand dessen, an welcher der drei Elektroden die Kurzschlüsse, insbesondere zahlreich, auftreten die Position relativ zu den drei Elektroden bestimmt werden.

Dementsprechend können mittels des Senkens der Spannung und/oder der Stromstärke derjenigen von den Elektroden erzeugten Lichtbögen, die den, insbesondere zahlreichen, Kurzschlüssen ausgesetzt sind, also die den erhöhten Stromstärken ausgesetzt sind, zahlreiche Vorteile bei dem Betrieb des Lichtbogenofens erzielt werden. So können das Risiko und die Häufigkeit von Beschädigungen, insbesondere Brüchen, der Elektroden reduziert werden. Auch kann eine thermische Überlastung der elektrischen Komponenten des Lichtbogenofens vermieden werden. Ferner kann eine Lebensdauer von den Elektroden vorgeordneten Leistungsschaltern erhöht werden. Schließlich kann auch ungewünschte Netzrückwirkungen wie Flickern vermieden und die Spannungsstabilität verbessert werden.

Bevorzugt ist dabei zudem, dass das Regelsystem dazu eingerichtet ist, ein Anheben der zumindest einen der drei Elektroden, an der der die erhöhte Stromstärke registriert wurde, zu initiieren. Dies ist vorteilhaft, da auch das Bilden von Bären oder Eisbergen, die auf der Schmelze schwimmen, gefährlich sein kann. Die Bären oder Eisberge können nämlich mit den Elektroden kollidieren und dadurch einen Kurzschluss hervorrufen. Bei einer Erkennung eines solchen Kurzschlusses kann die jeweilige Elektrode angehoben werden. Im Anschluss kann der sich nun unterhalb der Elektrode befindliche Bär oder Eisberg mittels der Lichtbögen der Elektrode geschmolzen werden.

Bevorzugt ist überdies, dass das Regelsystem dazu eingerichtet ist, als den zumindest einen Parameter die Frequenz der von der zumindest einen oder allen der drei Elektroden erzeugten Lichtbögen mittels des Umrichters zu erhöhen. Dies ermöglicht bei einem Drehstrom-Lichtbogenofen eine Stabilisierung des Lichtbogens durch eine Erhöhung der Reaktanz des Lichtbogenofens. Denn beim Drehstrom-Lichtbogenofen erlischt der Lichtbogen bei jedem Nulldurchgang des Stromes. Der Lichtbogen wird erneut gezündet, sobald eine erforderliche Zündspannung erreicht ist. Es entsteht allerdings eine kurze Stromlücke, also eine Verzerrung der Sinusform von Strom und Spannung. Dieser Effekt bedingt eine unerwünscht hohe Netzrückwirkung am Stromnetz. Die Größer der Stromlücke nach dem Nulldurchgang ist abhängig von der Schmelzphase (Hauptschmelz- oder Flachbadphase), von der Temperatur der Elektroden und des Einsatzmaterials, und von der Höhe der gesamten Reaktanz des Lichtbogenofens, da eine hohe Reaktanz schneller eine höhere Spannung nach einer Stromänderung aufbaut. Da die Reaktanz des Lichtbogenofens linear von der Frequenz des Drehstromes abhängt, kann durch ein Erhöhen der Frequenz durch den Umrichter auch die Reaktanz des Lichtbogenofens erhöht werden. Dadurch werden die unerwünschten Effekte der Stromlücken, insbesondere während der Hauptschmelzphase, reduziert. Daraus ergibt sich ein homogener Schmelzverlauf, der positiven Einfluss auf die Verfügbarkeit und die Produktionsqualität des Lichtbogenofens hat.

Die drei Elektroden sind kreisförmig angeordnet und das Regelsystem ist dazu eingerichtet, als Parameter die Spannungen und/oder Stromstärken der von allen drei Elektroden erzeugten Lichtbögen jeweils für jede der Elektroden abwechselnd entlang ihrer kreisförmigen Anordnung mittels des Umrichters zu erhöhen und zu senken, um eine Schmelze in dem Ofengefäß zu rühren. In der Flachbadphase werden nämlich die oben erwähnten metallurgischen Arbeiten durchgeführt, für die ein Rühren der Schmelze erforderlich ist. Eine Grundbewegung der Schmelze bzw. des Schmelzbades kommt von dem Drehstromsystem des Drehstrom-Lichtbogenofens selbst, nämlich durch Induktion analog zum Drehen eines Läufers bei einem Asynchronmotor. Diese kreisförmige Bewegung des Schmelzbades um die 3 Elektroden kann deutlich erhöht werden, indem das Schmelzbad zusätzlich durch geeignete mechanische Pulse angestoßen wird. Hier kann sich die Jetwirkung der Lichtbögen zu Nutze gemacht werden, wobei ein Strom von der Elektrode über den Lichtbogen ins Schmelzbad senkrecht eine Kraft von bis zu 5 Tonnen auf das Schmelzbad ausübt und das Schmelzbad eindrückt. Der Jeteffekt ist dabei linear abhängig von der Stromstärke.

So wird nun mittels des Umrichters die Stromstärke und/oder die Spannung der einzelnen, auch kreisförmig angeordneten Elektroden, zirkular geeignet verändert, sodass ein zeitlich abwechselndes Eindrücken des Schmelzbades unterhalb der Elektroden erreicht wird. Durch Einstellen einer geeigneten Frequenz und Drehrichtung für die Abfolge des Eindrückens, kann die natürliche Schmelzbad-Drehbewegung deutlich unterstützt werden. Eine weitere, zusätzliche lokale Schmelzbadbewegung wird durch den einzelnen Puls des erhöhten Jeteffektes unterhalb der jeweiligen Elektrode durch das Eindrücken und Entspannen des Bades erzielt.

Die eingangs gestellte Aufgabe wird gemäß einem zweiten Aspekt gelöst durch ein Verfahren zum Betreiben eines Lichtbogenofens mit einem Ofengefäß, drei Elektroden, die in dem Ofengefäß angeordnet sind, einem Transformator, der mit den drei Elektroden verbunden ist, und einem Stromanschluss zum Anschließen an ein Stromnetz zur Bereitstellung elektrischer Leistung an den Elektroden, wobei der Lichtbogenofen ferner einen Umrichter aufweist und das Verfahren den Schritt aufweist: Regeln zumindest eines Parameters der von zumindest einer der drei Elektroden erzeugten Lichtbögen mittels des Umrichters.

Damit weist das erfindungsgemäße Verfahren dieselben Vorteile wie der erfindungsgemäße Lichtbogenofen auf. Dabei kann auch der Lichtbogenofen des erfindungsgemäßen Verfahrens das Regelsystem aufweisen, das zur Regelung des zumindest eines Parameters der elektrischen Leistung an zumindest einer der drei Elektroden mittels des Umrichters eingerichtet sein kann und auch weitere Verfahrensschritte regeln kann. Dies muss aber nicht zwangsläufig der Fall sein. So können diese Verfahrensschritte auch von dem Schmelzer (Bediener) des Lichtbogenofens vorgenommen bzw. in Gang gesetzt werden. Dazu kann der Bediener auf entsprechende vom Lichtbogenofen, insbesondere von dem Umrichter, gelieferte Werte zurückgreifen und den Umrichter entsprechend regeln.

Bevorzugt ist, dass als der zumindest eine Parameter die Spannung und/oder die Stromstärke der von der zumindest einen der drei Elektroden erzeugten Lichtbögen mittels des Umrichters gegenüber den anderen der drei Elektroden gesenkt oder erhöht wird.

Ferner ist bevorzugt, dass als der zumindest eine Parameter die Spannung an und/oder die Stromstärke der von der zumindest einen der drei Elektroden erzeugten Lichtbögen mittels des Umrichters gesenkt wird, wenn mittels des Umrichters eine erhöhte Stromstärke an der zumindest einen der drei Elektroden registriert wird.

Dabei ist bevorzugt, dass die zumindest eine der drei Elektroden, an der die erhöhte Stromstärke registriert wurde, angehoben wird.

Ferner kann es vorgesehen sein, den zumindest einen Parameter der von der zumindest einen der drei Elektroden erzeugten Lichtbögen unabhängig von den anderen Elektroden zu regeln. Zudem kann vorgesehen sein, den zumindest einen Parameter der von der zumindest einen der drei Elektroden erzeugten Lichtbögen entsprechend eines Zustandes und/oder einer Position von Einsatzmaterial in dem Ofengefäß zu regeln. Weiterhin kann vorgesehen sein, als den zumindest einen Parameter die Spannung und/oder die Stromstärke der Lichtbögen der zumindest einen der drei Elektroden abhängig von einem Ergebnis einer Oberwellenanalyse der Elektroden und/oder einem Ergebnis einer Temperaturanalyse einer Auskleidung des Ofengefäßes zu senken oder zu erhöhen. Auch kann vorgesehen sein, als den zumindest einen Parameter die Frequenz der von der zumindest einen oder allen der drei Elektroden erzeugten Lichtbögen mittels des Umrichters zu erhöhen. Schließlich ist vorgesehen, dass die drei Elektroden kreisförmig angeordnet sind und als Parameter die Spannungen und/oder Stromstärken der von den drei Elektroden erzeugten Lichtbögen jeweils für jede der Elektroden abwechselnd entlang ihrer kreisförmigen Anordnung mittels des Umrichters zu erhöhen und zu senken, um eine Schmelze in dem Ofengefäß zu rühren. Dies kann jeweils mittels des Regelsystems und/oder durch den Schmelzer erfolgen.

Anhand der beigefügten Zeichnungen wird die Erfindung nachfolgend näher erläutert. Dabei zeigen:
- FIG. 1: eine schematische Ansicht eines Ausführungsbeispiels eines erfindungsgemäßen Lichtbogenofens, in der sich das Einsatzmaterial in einem ersten Zustand und an einer ersten Position befindet,
- FIG. 2: eine schematische Querschnittsansicht des Lichtbogenofens aus FIG. 1, in der sich das Einsatzmaterial in einem zweiten Zustand und an einer zweiten Position befindet,
- FIG. 3: eine schematische Draufsicht auf den Lichtbogenofen aus FIG. 1, in der sich das Einsatzmaterial in einem dritten Zustand befindet,
- FIG. 4: eine schematische Querschnittsansicht des Lichtbogenofen aus FIG. 1, in der sich das Einsatzmaterial in einem vierten Zustand und in einer vierten Position befindet,
- FIG. 5: eine schematische Draufsicht auf den Lichtbogenofen aus FIG. 1, in der sich das Einsatzmaterial in einem fünften Zustand und in einer fünften Position befindet, und
- FIG. 6: eine schematische Querschnittsansicht des Lichtbogenofens aus FIG. 5.

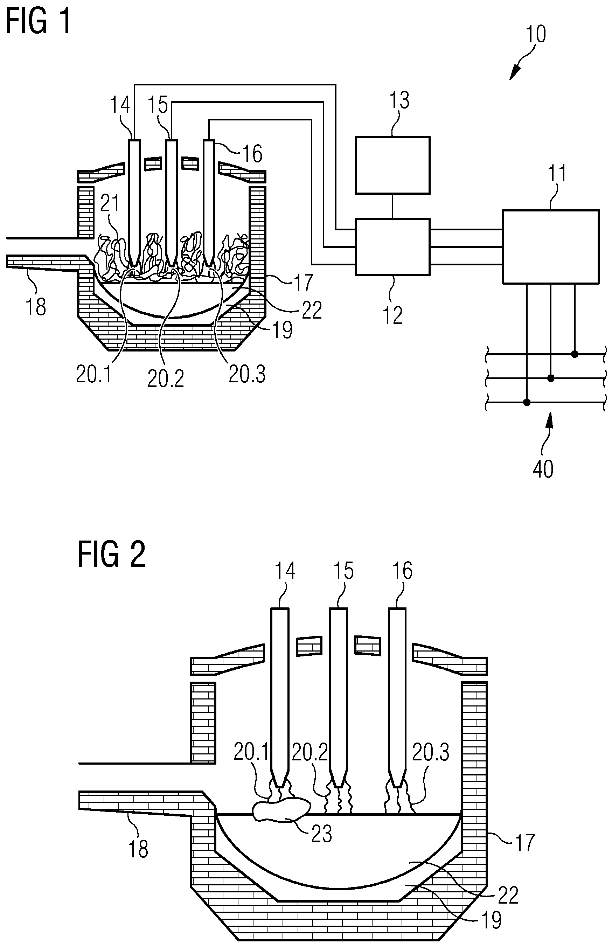

Elemente mit gleicher Funktion und Wirkungsweise sind in den FIGUREN 1 bis 6 jeweils mit denselben Bezugszeichen versehen. Mehrere gleiche Elemente in einer Figur sind mit einer fortlaufenden Nummerierung versehen, wobei die fortlaufende Nummerierung durch einen Punkt von ihrem Bezugszeichen getrennt ist.

FIGUR 1 zeigt eine schematische Ansicht eines Ausführungsbeispieles eines erfindungsgemäßen Lichtbogenofens 10, in der sich das Einsatzmaterial 21 in einem ersten Zustand und an einer ersten Position befindet.

Der Lichtbogenofen 10 ist vorliegend als ein Drehstrom-Lichtbogenofen ausgebildet. Der Lichtbogenofen 10 weist ein Ofengefäß 17 auf, in das das Einsatzmaterial 21 eingefüllt ist. In FIGUR 1 befindet sich der Lichtbogenofen 10 in der Hauptschmelzphase, bei der das Einsatzmaterial 21 aus seiner festen Form eingeschmolzen wird. Das Einsatzmaterial 21 schwimmt dabei auf seiner eigenen Schmelze 22. Das Ofengefäß 17 ist dabei mit einer feuerfesten Verkleidung 19 ausgekleidet, um der Schmelze 22 zu widerstehen. Ferner was das Ofengefäß 17 eine Gießschnauze 18 auf.

Drei Elektroden 14, 15, 16 sind in das Ofengefäß 17 eingelassen. Die Elektroden 14, 15, 16 sind jeweils stromführend mit einem Umrichter 12 verbunden. Der Umrichter 12 ist mit einem Transformator 11 verbunden. Der Transformator 11 ist an ein Stromnetz 40 angeschlossen. Ein Regelsystem 13 ist mit dem Umrichter 12 verbunden oder umfasst den Umrichter 12. Das Regelsystem 13 regelt den Strom bzw. die Lichtbögen 20 der Elektroden 14, 15, 16 mittels des Umrichters 12.

Die Elektroden 14, 15, 16 erzeugen damit jeweils Lichtbögen 20.1, 20.2, 20.3 zwischen diesen und dem Einsatzmaterial 21, die das Einsatzmaterial 21 zum Schmelzen bringen.

Mittels des Regelsystems 13 oder von dem Schmelzer kann die Stromstärke und/oder die Spannung der Lichtbögen einzelner oder aller Elektroden 14, 15, 16 begrenzt werden, wenn Teile des Einsatzmaterials 21 infolge der zunehmenden Instabilität seiner Schüttung gegen die Elektroden 14, 15, 16 fallen und zu Kurzschlüssen führen. Diese Kurzschlüsse werden von dem Umrichter 12 dadurch registriert, dass es zu erhöhten Stromstärken kommt.

FIGUR 2 zeigt eine schematische Querschnittsansicht des Lichtbogenofens 10 aus FIG. 1, in der sich das Einsatzmaterial 21 in einem zweiten Zustand und an einer zweiten Position befindet. Hier und in den folgenden Figuren sind die Apparatur des Lichtbogenofens 10 umfassend den Umrichter 12, den Transformator 11, und das Regelsystem 13 sowie das Stromnetz 40 der Übersichtlichkeit halber nicht dargestellt.

Hierbei hat sich ein Bär 23 (zusammengebacktes Einsatzmaterial) unterhalb der ersten Elektrode 14 gebildet. Die Länge des Lichtbogens 20.1 der ersten Elektrode 14 ist damit kürzer als die der anderen Lichtbögen 20.2, 20.3 der zweiten und dritten Elektroden 15, 16. Demgemäß kann der Umrichter 12 den Bären 23 erkennen. Als Maßnahme gegen einen Zusammenstoß der Elektrode 14 mit dem Bären 23 kann die erste Elektrode 14 mechanisch angehoben werden, um so einen Bruch der ersten Elektrode 14 zu verhindern.

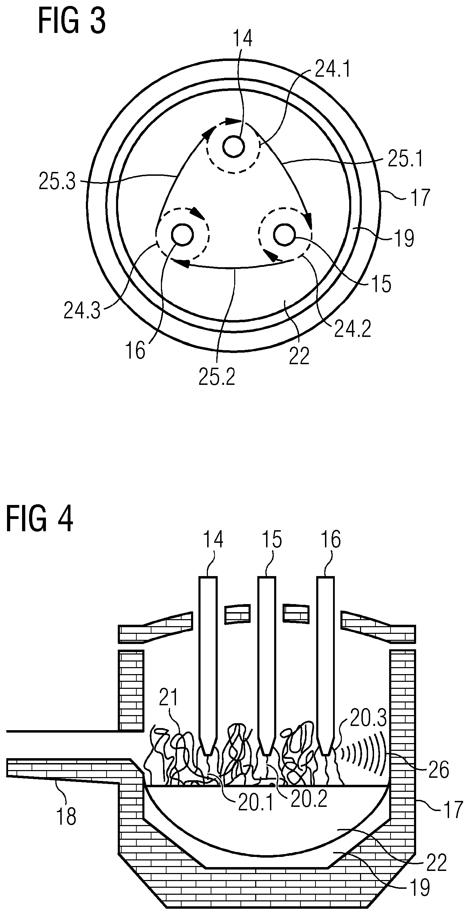

FIGUR 3 zeigt eine schematische Draufsicht auf den Lichtbogenofen 10 aus FIG. 1, in der sich das Einsatzmaterial 21 in einem dritten Zustand befindet.

Das Einsatzmaterial 21 liegt vorliegend in der Flachbadphase und damit vollständig geschmolzen, also als Schmelze 22, vor. Die Elektroden 14, 15, 16 sind vorliegend kreisförmig angeordnet. Mittels der Versorgung der Elektroden 14, 15, 16 mit Drehstrom wird die Schmelze 22 entsprechend einer individuellen Strömungs24.1, 24.2, 24.3 gerührt.

Ferner werden die Spannungen und/oder Stromstärken der von den drei Elektroden 14, 15, 16 erzeugten Lichtbögen 20 jeweils für jede der Elektroden 14, 15, 16 abwechselnd entlang ihrer kreisförmigen Anordnung mittels des Umrichters 12 zu erhöht und gesenkt. Dadurch wird die Schmelze 22 entlang der gemeinsamen Strömung 25.1, 25.2, 25.3 verstärkt gerührt. Dadurch wird eine noch homogenere Durchmischung bei den metallurgischen Arbeiten während der Flachbadphase erzielt.

FIGUR 4 zeigt eine schematische Querschnittsansicht des Lichtbogenofens 10 aus FIG. 1, in der sich das Einsatzmaterial in einem vierten Zustand und in einer vierten Position befindet.

Dabei befindet sich viel Einsatzmaterial in der Ofenzone der ersten Elektrode 14, wenig Einsatzmaterial in der Ofenzone der zweiten Elektrode 15 und kein Einsatzmaterial in der Ofenzone der dritten Elektrode 16. Dies kann beispielsweise aus einer ungleichmäßigen Schüttung des Einsatzmaterials 21 herrühren. Wenn die Elektroden 14, 15, 16 mit gleicher elektrischer Leistung betrieben werden ergibt sich eine hohe Strahlung 26 auf die feuerfeste Verkleidung 19. Insgesamt wird das Verschleißbild des Lichtbogenofens 10 sehr uneinheitlich, was Reparaturen erschwert und Reparaturzeiten schwer planbar macht.

Daher ist es möglich, mittels des Umrichters 12 die Spannung und/oder die Stromstärke der von der dritten Elektrode 16 erzeugten Lichtbögen 20 gegenüber den anderen Elektroden 14, 15 zu senken und auch die Spannung und/oder die Stromstärke der von der zweiten Elektrode 15 erzeugten Lichtbögen 20 gegenüber der ersten Elektrode 14 zu senken. Dadurch wird ein effizienteres Schmelzen des Einsatzmaterials 21 erreicht und das Verschleißbild des Lichtbogenofens 10 vergleichmäßigt.

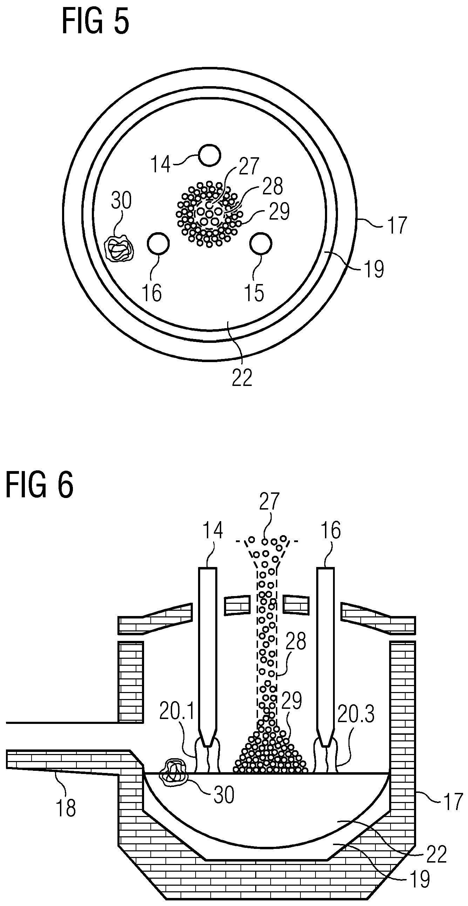

FIGUR 5 zeigt eine schematische Draufsicht auf den Lichtbogenofen 10 aus FIG. 1, in der sich das Einsatzmaterial 21 in einem fünften Zustand und in einer fünften Position befindet.

FIGUR 6 zeigt eine zu FIGUR 5 korrespondierende schematische Querschnittsansicht des Lichtbogenofens 10 aus FIG. 5.

Das Einsatzmaterial 21 in den FIGUREN 5 und 6 liegt als Eisenschwamm vor. Eisenschwammkugeln 27 werden in das Ofengefäß 17 geschüttet, sodass ein Strahl 28 an Eisenschwammkugeln 27 im Wesentlichen in der Mitte zwischen den Elektroden l4, 15, 16 landet. Die Eisenschwammkugeln 27 müssen jedoch nicht mittig, sondern können mittig zwischen den Elektroden 14, 15, 16 oder davon abweichend landen. Die Eisenschwammkugeln 27 bilden dabei einen Eisenschwammberg 29.

Wenn nun der Eisenschwammberg 29 zu einer der Elektroden 14, 15, 16 treibt, kann dies mittels des Umrichters 12 erkannt werden und entsprechend eine höhere Leistung an dieser Elektrode 14, 15, 16 vorgegeben werden, damit der Eisenschwammberg 29 nicht mit der Elektrode 14, 15, 16 kollidiert und zu einem Bruch der Elektrode 14, 15, 16 führt. Auch hat sich ein Eisenschwammeisberg 30 am Rand des Ofengefäßes 17 in der Ofenzone der dritten Elektrode 16 gebildet. Auch den Eisenschwammeisberg 30 kann der Umrichter 12 erkennen, sodass das Regelsystem 13 eine entsprechende Regelung zum schnelleren Abschmelzen und Vermeiden einer Kollision bereitstellen kann.

### Bezugszeichenliste

- 10: Ofengefäß
- 11: Transformator
- 12: Umrichter
- 13: Regelsystem
- 14: erste Elektrode
- 15: zweite Elektrode
- 16: dritte Elektrode
- 17: Ofengefäß
- 18: Gießschnauze
- 19: feuerfeste Verkleidung
- 20: Lichtbogen
- 21: Einsatzmaterial
- 22: Schmelze
- 23: Bär
- 24: individuelle Strömung
- 25: gemeinsame Strömung
- 26: Strahlung
- 27: Eisenschwammkugel
- 28: Eisenschwammstrahl
- 29: Eisenschwammberg
- 30: Eisenschwammeisberg
- 40: Stromnetz

## Patentansprüche

1. Lichtbogenofen (10) mit einem Ofengefäß (17), drei Elektroden (14, 15, 16), die in dem Ofengefäß (17) angeordnet sind, einem Transformator (11), der mit den drei Elektroden (14, 15, 16) verbunden ist, und einem Stromanschluss zum Anschließen an ein Stromnetz (40) zur Bereitstellung von Strom an den Elektroden (14, 15, 16), wobei
der Lichtbogenofen (10) einen Umrichter (12) und ein Regelsystem (13) aufweist, wobei das Regelsystem (13) dazu eingerichtet ist, zumindest einen Parameter von zumindest von einer der drei Elektroden (14, 15, 16) erzeugten Lichtbögen (20) mittels des Umrichters (12) zu regeln,
**dadurch gekennzeichnet, dass**
die drei Elektroden (14, 15, 16) kreisförmig angeordnet sind und das Regelsystem (13) dazu eingerichtet ist, als Parameter die Spannungen und/oder Stromstärken der von den drei Elektroden (14, 15, 16) erzeugten Lichtbögen (20) jeweils für jede der Elektroden (14, 15, 16) abwechselnd entlang ihrer kreisförmigen Anordnung mittels des Umrichters (12) zu erhöhen und zu senken, um eine Schmelze (22) in dem Ofengefäß (17) zu rühren.

2. Lichtbogenofen (10) nach Anspruch 1,
**dadurch gekennzeichnet, dass**
das Regelsystem (13) dazu eingerichtet ist, den zumindest einen Parameter der von der zumindest einen der drei Elektroden (14, 15, 16) erzeugten Lichtbögen (20) unabhängig von den anderen Elektroden (14, 15, 16) zu regeln.

3. Lichtbogenofen (10) nach einem der voranstehenden Ansprüche,
**dadurch gekennzeichnet, dass**
der Umrichter (12) als ein Matrixumrichter ausgebildet ist.

4. Lichtbogenofen (10) nach einem der voranstehenden Ansprüche,
**dadurch gekennzeichnet, dass**
der Lichtbogenofen (10) als ein Drehstrom-Lichtbogenofen (10) ausgebildet ist.

5. Lichtbogenofen (10) nach einem der voranstehenden Ansprüche,
**dadurch gekennzeichnet, dass**
das Regelsystem (13) dazu eingerichtet ist, als den zumindest einen Parameter die Spannung und/oder die Stromstärke der von der zumindest einen der drei Elektroden (14, 15, 16) erzeugten Lichtbögen (20) gegenüber den anderen der drei Elektroden (14, 15, 16) mittels des Umrichters (12) zu senken oder zu erhöhen.

6. Lichtbogenofen (10) nach Anspruch 5,
**dadurch gekennzeichnet, dass**
das Regelsystem (13) dazu eingerichtet ist, als den zumindest einen Parameter die Spannung und/oder die Stromstärke der von der zumindest einen der drei Elektroden (14, 15, 16) erzeugten Lichtbögen (20) abhängig von einem Ergebnis einer Oberwellenanalyse der Elektroden (14, 15, 16) und/oder einem Ergebnis einer Temperaturanalyse einer Auskleidung (19) des Ofengefäßes (17) zu senken oder zu erhöhen.

7. Lichtbogenofen (10) nach Anspruch 5 oder 6,
**dadurch gekennzeichnet, dass**
das Regelsystem (13) dazu eingerichtet ist, als den zumindest einen Parameter die Spannung und/oder Stromstärke der von der zumindest einen der drei Elektroden (14, 15, 16) erzeugten Lichtbögen (20) mittels des Umrichters (12) zu senken, wenn mittels des Umrichters (12) eine erhöhte Stromstärke an der zumindest einen der drei Elektroden (14, 15, 16) registriert wird.

8. Lichtbogenofen (10) nach Anspruch 7,
**dadurch gekennzeichnet, dass**
das Regelsystem (13) dazu eingerichtet ist, ein Anheben der zumindest einen der drei Elektroden (14, 15, 16), an der die erhöhte Stromstärke registriert wurde, zu initiieren.

9. Lichtbogenofen (10) nach einem der voranstehenden Ansprüche,
**dadurch gekennzeichnet, dass**
das Regelsystem (13) dazu eingerichtet ist, als den zumindest einen Parameter die Frequenz der von der zumindest einen oder allen der drei Elektroden (14, 15, 16) erzeugten Lichtbögen (20) mittels des Umrichters (12) zu erhöhen.

10. Verfahren zum Betreiben eines Lichtbogenofens (10) mit einem Ofengefäß (17), drei Elektroden (14, 15, 16), die in dem Ofengefäß (17) angeordnet sind, einem Transformator (11), der mit den drei Elektroden (14, 15, 16) verbunden ist, und einem Stromanschluss zum Anschließen an ein Stromnetz (40) zur Bereitstellung elektrischer Leistung an den Elektroden (14, 15, 16), wobei der Lichtbogenofen (10) ferner einen Umrichter (12) und ein Regelsystem (13) aufweist, und das Verfahren den Schritt aufweist: Regeln zumindest eines Parameters der von zumindest einer der drei Elektroden (14, 15, 16) erzeugten Lichtbögen (20) mittels des Umrichters (12)
**dadurch gekennzeichnet, dass**
die drei Elektroden kreisförmig angeordnet sind und als Parameter die Spannungen und/oder Stromstärken der von den drei Elektroden erzeugten Lichtbögen jeweils für jede der Elektroden abwechselnd entlang ihrer kreisförmigen Anordnung mittels des Umrichters erhöht und gesenkt werden, um eine Schmelze in dem Ofengefäß zu rühren.

11. Verfahren nach Anspruch 10,
**dadurch gekennzeichnet, dass**
als der zumindest eine Parameter die Spannung und/oder die Stromstärke der von der zumindest einen der drei Elektroden (14, 15, 16) erzeugten Lichtbögen (20) mittels des Umrichters (12) gegenüber den anderen der drei Elektroden (14, 15, 16) gesenkt oder erhöht wird.

12. Verfahren nach Anspruch 11,
**dadurch gekennzeichnet, dass**
als der zumindest eine Parameter die Spannung an und/oder die Stromstärke der von der zumindest einen der drei Elektroden (14, 15, 16) erzeugten Lichtbögen (20) mittels des Umrichters (12) gesenkt wird, wenn mittels des Umrichters (12) eine erhöhte Stromstärke an der zumindest einen der drei Elektroden (14, 15, 16) registriert wird.

13. Verfahren nach Anspruch 12,
**dadurch gekennzeichnet, dass**
die zumindest eine der drei Elektroden (14, 15, 16), an der die erhöhte Stromstärke registriert wurde, angehoben wird.

## Claims

1. An electric arc furnace (10) with a furnace vessel (17), three electrodes (14, 15, 16) which are arranged in the furnace vessel (17), a transformer (11) which is connected to the three electrodes (14, 15, 16), and a current connection for connecting to a current network (40) for providing current to the electrodes (14, 15, 16),
wherein the electric arc furnace (10) has a converter (12) and a control system (13), wherein the control system (13) is configured to control at least one parameter of electric arcs (20) generated by at least one of the three electrodes (14, 15, 16) by means of the converter (12),
**characterised in that**
the three electrodes (14, 15, 16) are circularly arranged and the control system (13) is configured to increase and lower, as parameters, the voltages and/or current intensities of the electric arcs (20) generated by the three electrodes (14, 15, 16) for each of the electrodes (14, 15, 16) alternately along their circular arrangement by means of the converter (12) in order to stir a melt (22) in the furnace vessel (17).

2. The electric arc furnace (10) according to claim 1,
**characterised in that**
the control system (13) is configured to control the at least one parameter of the electric arcs (20) generated by the at least one of the three electrodes (14, 15, 16) independently of the other electrodes (14, 15, 16).

3. The electric arc furnace (10) according to any one of the preceding claims,
**characterised in that**
the converter (12) is formed as a matrix converter.

4. The electric arc furnace (10) according to any one of the preceding claims,
**characterised in that**
the electric arc furnace (10) is formed as a three-phase current electric arc furnace (10).

5. The electric arc furnace (10) according to any one of the preceding claims,
**characterised in that**
the control system (13) is configured to lower or increase, as the at least one parameter, the voltage and/or the current intensity of the electric arcs (20) generated by the at least one of the three electrodes (14, 15, 16) relative to the others of the three electrodes (14, 15, 16) by means of the converter (12).

6. The electric arc furnace (10) according to claim 5,
**characterised in that**
the control system (13) is configured to lower or increase, as the at least one parameter, the voltage and/or the current intensity of the electric arcs (20) generated by the at least one of the three electrodes (14, 15, 16) depending on a result of a harmonic analysis of the electrodes (14, 15, 16) and/or a result of a temperature analysis of a lining (19) of the furnace vessel (17).

7. The electric arc furnace (10) according to claim 5 or 6,
**characterised in that**
the control system (13) is configured to lower the voltage and/or current intensity of the electric arcs (20) generated by the at least one of the three electrodes (14, 15, 16) by means of the converter (12) as the at least one parameter when an increased current intensity is registered at the at least one of the three electrodes (14, 15, 16) by means of the converter (12).

8. The electric arc furnace (10) according to claim 7,
**characterised in that**
the control system (13) is configured to initiate a lifting of the at least one of the three electrodes (14, 15, 16) at which the increased current intensity was registered.

9. The electric arc furnace (10) according to any one of the preceding claims,
**characterised in that**
the control system (13) is configured to increase, as the at least one parameter, the frequency of the electric arcs (20) generated by the at least one or all of the three electrodes (14, 15, 16) by means of the converter (12).

10. A method for operating an electric arc furnace (10) having a furnace vessel (17), three electrodes (14, 15, 16) which are arranged in the furnace vessel (17), a transformer (11) which is connected to the three electrodes (14, 15, 16), and a current connection for connecting to a current network (40) for providing electrical power to the electrodes (14, 15, 16), wherein the electric arc furnace (10) further comprises a converter (12) and a control system (13), and the method has the step of: controlling at least one parameter of the electric arcs (20) generated by at least one of the three electrodes (14, 15, 16) by means of the converter (12),
**characterised in that**
the three electrodes are circularly arranged and, as parameters, the voltages and/or current intensities of the electric arcs generated by the three electrodes are increased and lowered alternately for each of the electrodes along their circular arrangement by means of the converter in order to stir a melt in the furnace vessel.

11. The method according to claim 10,
**characterised in that**
the voltage and/or the current intensity of the electric arcs (20) generated by the at least one of the three electrodes (14, 15, 16) is lowered or increased by means of the converter (12) as the at least one parameter relative to the other of the three electrodes (14, 15, 16).

12. The method according to claim 11,
**characterised in that**
the voltage at and/or the current intensity of the electric arcs (20) generated by the at least one of the three electrodes (14, 15, 16) is lowered by means of the converter (12) as the at least one parameter when an increased current intensity is registered at the at least one of the three electrodes (14, 15, 16) by means of the converter (12).

13. The method according to claim 12,
**characterised in that**
the at least one of the three electrodes (14, 15, 16) at which the increased current intensity was registered is lifted.

## Revendications

1. Four à arc (10) comprenant une cuve de four (17), trois électrodes (14, 15, 16) disposées dans la cuve de four (17), un transformateur (11) connecté aux trois électrodes (14, 15, 16) et une connexion d'alimentation pour la connexion à un réseau électrique (40) pour alimenter les électrodes (14, 15, 16), dans lequel
le four à arc (10) comprend un convertisseur (12) et un système de commande (13), le système de commande (13) étant conçu pour commander au moins un paramètre des arcs (20) générés par au moins une des trois électrodes (14, 15, 16) au moyen du convertisseur (12),
**caractérisé en ce que**
les trois électrodes (14, 15, 16) sont disposées en cercle et le système de commande (13) est conçu pour augmenter et diminuer, en tant que paramètres, les tensions et/ou les courants des arcs (20) générés par les trois électrodes (14, 15, 16) pour chacune des électrodes (14, 15, 16) alternativement le long de leur disposition circulaire au moyen du convertisseur (12) afin de mélanger une masse fondue (22) dans la cuve de four (17).

2. Four à arc (10) selon la revendication 1,
**caractérisé en ce que**
le système de commande (13) est conçu pour commander au moins un paramètre des arcs (20) générés par au moins une des trois électrodes (14, 15, 16) indépendamment des autres électrodes (14, 15, 16).

3. Four à arc (10) selon l'une quelconque des revendications précédentes,
**caractérisé en ce que**
le convertisseur (12) est conçu comme un convertisseur matriciel.

4. Four à arc (10) selon l'une quelconque des revendications précédentes,
**caractérisé en ce que**
le four à arc (10) est conçu comme un four à arc triphasé (10).

5. Four à arc (10) selon l'une quelconque des revendications précédentes,
**caractérisé en ce que**
le système de commande (13) est conçu pour réduire ou augmenter, en tant qu'au moins un paramètre, la tension et/ou l'intensité du courant des arcs (20) générés par au moins une des trois électrodes (14, 15, 16) par rapport à l'autre des trois électrodes (14, 15, 16) au moyen du convertisseur (12).

6. Four à arc (10) selon la revendication 5,
**caractérisé en ce que**
le système de commande (13) est conçu pour réduire ou augmenter, en tant qu'au moins un paramètre, la tension et/ou l'intensité du courant des arcs (20) générés par au moins une des trois électrodes (14, 15, 16) en fonction d'un résultat d'une analyse harmonique des électrodes (14, 15, 16) et/ou d'un résultat d'une analyse de température d'un revêtement (19) de la cuve de four (17).

7. Four à arc (10) selon la revendication 5 ou 6,
**caractérisé en ce que**
le système de commande (13) est configuré pour réduire, en tant qu'au moins un paramètre, l'intensité de tension et/ou de courant des arcs (20) générés par au moins une des trois électrodes (14, 15, 16) au moyen du convertisseur (12) lorsqu'une intensité de courant accrue est enregistrée sur au moins une des trois électrodes (14, 15, 16) au moyen du convertisseur (12).

8. Four à arc (10) selon la revendication 7,
**caractérisé en ce que**
le système de commande (13) est configuré pour initier une élévation d'au moins une des trois électrodes (14, 15, 16) au niveau desquelles l'intensité de courant accrue a été enregistrée.

9. Four à arc (10) selon l'une quelconque des revendications précédentes,
**caractérisé en ce que**
le système de commande (13) est conçu pour augmenter, en tant qu'au moins un paramètre, la fréquence des arcs (20) générés par au moins une ou toutes les trois électrodes (14, 15, 16) au moyen du convertisseur (12).

10. Procédé de fonctionnement d'un four à arc (10) comprenant une cuve (17), trois électrodes (14, 15, 16) disposées dans la cuve (17), un transformateur (11) connecté aux trois électrodes (14, 15, 16) et une connexion d'alimentation pour la connexion à un réseau électrique (40) pour alimenter les électrodes (14, 15, 16), dans lequel le four à arc (10) comprend en outre un convertisseur (12) et un système de commande (13), et le procédé comprend l'étape consistant à : commander au moins un paramètre des arcs (20) générés par au moins l'une des trois électrodes (14, 15, 16) au moyen du convertisseur (12),
**caractérisé en ce que**
les trois électrodes sont disposées en cercle et, en tant que paramètres, les tensions et/ou courants des arcs générés par les trois électrodes sont alternativement augmentés et diminués pour chacune des électrodes le long de leur disposition circulaire au moyen du convertisseur afin de mélanger une masse fondue dans la cuve de four.

11. Procédé selon la revendication 10,
**caractérisé en ce que**
en tant qu'au moins un paramètre, la tension et/ou l'intensité du courant des arcs (20) générés par au moins une des trois électrodes (14, 15, 16) est réduite ou augmentée au moyen du convertisseur (12) par rapport à l'autre des trois électrodes (14, 15, 16).

12. Procédé selon la revendication 11,
**caractérisé en ce que**
en tant qu'au moins un paramètre, la tension et/ou l'intensité du courant des arcs (20) générés par au moins une des trois électrodes (14, 15, 16) est réduite au moyen du convertisseur (12) lorsqu'une intensité de courant accrue est enregistrée au niveau d'au moins une des trois électrodes (14, 15, 16) au moyen du convertisseur (12).

13. Procédé selon la revendication 12,
**caractérisé en ce que**
au moins une des trois électrodes (14, 15, 16) sur lesquelles l'intensité de courant accrue a été enregistrée est soulevée.
